# EUROPEAN PATENT APPLICATION

(11) **EP 2 036 434 A2**
(43) Date of publication of application: **18.03.2009**
(21) Application number: 08164136.7
(22) Date of filing: 11.09.2008
(51) Int. Cl.: A01M 25/00

(54) **Slug Trap and Method for Catching and Controlling Slugs**

(30) Priority: 17.09.2007 DK 200701342
(71) Applicant: Kjær, Frank, 8000 Aarhus C (DK)
(72) Inventor: Kjær, Frank Peter, 8270, Højbjerg (DK)
(74) Representative: Tellefsen, Jens J.

(57) **Abstract**

The present invention concerns a slug trap (10), preferably for Spanish slugs where the slug trap in the direction intended for use includes: i) a vessel part (20) which is suited for containing a luring liquid which attracts snails, where the vessel is closed downwards and open upwards, as the container part has an upper edge (40) defining an opening, and where the upper edge of the vessel part defines a transition to: ii) a ramp part (30) which extends outwards and downwards in relation to the interior of the vessel part and which is terminated by a lower edge (50), where the vessel part tapers downwards and has a dimension in vertical direction which is greater than the dimension of the ramp part in vertical direction, and wherein the ramp part (50) thus defines a ramp for snails by which the snails' access to the luring liquid of the vessel part is facilitated, and where the tapering of the vessel part enables secure fixing in the ground in the place where the trap is desired to be placed, in that the vessel part of the snail trap may easily be trod partly down into the earth without use of tools.

## Description

### Field of the Invention

The present invention concerns a slug trap, preferably for Spanish slugs, wherein the slug trap is of the kind where slugs are lured down into a luring liquid, after which they die, preferably by drowning or dissolving. The present invention furthermore concerns a method for making a slug trap according to the invention, and a use of such a slug trap for catching and controlling slugs. Moreover, the invention concerns a method for catching and controlling slugs by using a slug trap according to the invention.

### Background of the Invention

The Spanish slug (*Arion lusitanicus*), also known and notorious as "the killer slug", is a growing problem for Danish garden owners and farmers. Besides the fact that most people regard the slug as slimy and repulsive, the slug constitutes a problem for garden owners and farmers, since it eats the vegetation, particularly vegetables. Besides, the Spanish slug is a hazard to children, in particular small children playing in gardens, as it has been indicated that the Spanish slug is a carrier of a number of pathogenic parasites and microorganisms which can be dangerous to humans. Such pathogenic parasites and microorganisms may be deposited on the soil and vegetation of the garden by the slug, and thereby come into direct contact with humans subsequently.

In recent years, an increasing number of Spanish slugs have been established in Denmark and in North Europe in general. The strong rate of propagation of the Spanish slug in later years is not the least due to humid and mild summer months. To this is added that *Arion lusitanicus,* like many other slugs and snails, is a hermaphrodite. A single slug may therefore by itself colonise an area which hitherto has been without any Spanish slugs.

The extent of the problem with Spanish slugs is also illustrated by information in the daily news that the Danish minister for the environment has considered an injunction for garden owners to engage in controlling the Spanish slug. Another example is a notice in the news that another prominent member of the Danish parliament has proposed to throw in the Danish home guard in the battle against the Spanish slug.

Various methods for controlling Spanish slugs and/or preventing their destructive actions exist already. Examples to be mentioned: Simple manual collection and killing; poultry keeping; slug fences preventing passage of Spanish slugs; infection by parasites such as nematodes/round worms by watering these on the soil; slug collars applied on plant stems; chemical control; and so-called slug traps which attract slugs and kill them, e.g. by drowning.

The above measures for limiting the ravaging of the Spanish slug all have their limits and drawbacks. Manual collection and killing is an efficient method but it is time-consuming to an extent making it unsuitable for the common busy garden owner. Poultry keeping will not be a realistic solution for most garden owners. Since Spanish slugs are found all over in a garden, an efficient solution via poultry keeping will require that the whole garden is fenced in, which very few garden owners want. The same problem applies to the so-called slug fences. Infecting with e.g. nematodes/roundworms may be an efficient solution, but this solution has the drawback that the so-called utility animals of the garden are in danger of being infected. Applying slug collars will not be an option for most garden owners as this method is time-consuming and cumbersome. Chemical control has the drawback that the entire environment of the garden is affected by harmful chemical substances.

The present invention concerns a slug trap of the kind where slugs are lured down into a luring liquid, after which they die, preferably by drowning or dissolving.

Such slug traps are already found. Slug traps of this kind operates in that a vessel containing a luring liquid which is attractive to Spanish slugs is provided on the ground at a suitable place in the garden. Spanish slugs attracted by the lure crawl into the vessel which, however, has a liquid level so deep that they cannot get out. The slug which cannot get out again will then die by drowning and/or by the lure entirely or partially dissolving the slug. Several vessels are typically disposed at different positions in the garden for efficient slug control. A commonly used luring liquid is beer or suspended brewer's yeast, but other more sophisticated means may also be applied.

As indicated above, the slug trap vessel has to be deep enough that the slug cannot get "foothold" and push itself out of the trap. As *Arion lusitanicus* can be up to 12 cm long, it is necessary that the vessel of the slug trap at least has a depth of 10 cm. Since it is desired to reduce the consumption of luring liquid as much as possible, the prior art slug traps are designed as a relatively high vessel with small dimensions in horizontal direction. In order to let the slugs get access to the luring liquid, it is necessary to provide that the upper edge of the vessel can be disposed at the level of the ground surface, requiring that a hole is dug for the trap. The prior art slug traps are typically of a complicated design with two or more individual parts to be assembled. This complicated design entails a relatively high price of production for the traps. Typical retail sale prices for this type of snail traps are DKK 70 - 270 apiece.

A similar slug trap is known from CH 593 004 A5. This publication describes a slug trap which in the orientation intended in use includes a conical, downwards tapering vessel part which is to be placed in the ground. The vessel part includes a stem extending in vertical direction from the bottom interior of the vessel part at a distance higher than the upper edge of the vessel part. The upper edge of the vessel part defines a transition to a ring extending downwards and outwards. The stem carries a cover screen which i.a. prevents ingress of rainwater and other animals to the interior of the vessel part. This type of slug trap is intended for catching and killing slugs by attracting slugs with a luring liquid contained in the vessel part of the trap. The vessel part of the trap may furthermore include poison. Though this type of slug trap is efficient when it has been placed in the ground, as the vessel part may be designed such that it has a length efficiently ensuring the death of the slug, it is, however, connected with a great effort to provide this type of slug trap securely in the soil where it is desired to be placed. This is due to the design of the trap, including a stem projecting up from the interior of the vessel part. This stem entails that this type of slug trap cannot easily be trod down into the soil where it is wanted to be positioned. Instead, one is required to bury this type of slug trap which is a time-consuming and work-intensive process.

For providing efficient control of Spanish slugs, it is often necessary to distribute several slug traps with suitable spacing. A trap concentration of one trap per 50 m² or one trap per 100 m² has appeared to be suitable, as a typical Danish garden has an area of 500 to 900 m². For efficient removal of Spanish slugs in a garden of typical size, 5 to 18 slug traps are thus required.

The relatively large number of slug traps entails some digging work in connection with the placing of the traps. Besides, the required large number of traps is a not insignificant item on the garden owner's budget. These drawbacks of the prior art slug traps may have the garden owner abstaining from initiating an efficient control of the Spanish slug.

It is obvious that the above problems of the prior art slug traps are exceedingly increased for the farmer with many hectares of field.

According to expert opinions it is necessary to join hands if an efficient control of Spanish slugs is to have a chance of success. For this reason it is required with a slug trap which by its modest price and its easy preparation for use will encourage the individual garden owner as well as the farmer more to make an effort against the invasion of the Spanish slug.

### Object of the Invention

The purpose of the present invention is provide a slug trap, preferably for Spanish slugs, wherein the slug trap is of the kind where slugs are lured down into a luring liquid, after which they die, preferably by drowning or dissolving, and where the slug trap has a design ensuring cheap production and which is more easily provided in a condition ready for use.

### Description of the Invention

In a first aspect, the present invention concerns a slug trap 10, preferably for Spanish slugs, wherein the slug trap is of the kind where slugs are lured down into a luring liquid, after which they die, preferably by drowning or dissolving, where the slug trap in the orientation intended in use includes:
i) a vessel part 20 which is suited for containing a luring liquid which attracts slugs, where the vessel is closed downwards and open upwards, as the vessel part has an upper edge 40 defining an opening, and where the upper edge of the vessel part defines a transition to:
ii) a ramp part 30 extending outwards and downwards relative to the interior of the vessel part and which is terminated by a lower edge 50;
wherein the vessel part 20 is tapering downwards and has a dimension in vertical direction which is greater than the dimension of the ramp part 30 in vertical direction;
wherein the slug trap is suited for stacking as it has a design that enables that the vessel part of one slug trap can be put down into the vessel part of another slug trap for achieving a stack;
wherein the ratio between the dimension of the ramp part in vertical direction (h₂) and the dimension of the vessel part in vertical direction (h₁) is h₂/h₁ = 0.2 - 0.5;
wherein the ramp part 30 thus defines a ramp for slugs by which the slugs' access to the luring liquid of the vessel part is facilitated, and where the tapering of the vessel part enables secure fixing in the ground at the point where the traps is desired to be placed, as the vessel part of the slug trap may easily be trod partly down into the earth without use of tools such that the lower edge 50 of the ramp part at least partly touches the ground.

In a second aspect, the present invention concerns a method for making a slug trap 10 according to the present invention, wherein the slug trap is made of plastic.

In a third aspect, the present invention concerns use of a slug trap 10 according to the invention for catching and controlling slugs, preferably Spanish slugs.

In a fourth aspect, the present invention concerns a method for catching and controlling slugs, preferably Spanish slugs, characterised in that a slug trap 10 according to the present invention is positioned at a place where slugs are found to be a nuisance, as the vessel part 20 of the slug trap is partly pressed into the earth such that the lower edge 50 of the ramp part at least partly touches the ground, preferably such that the lower edge of the ramp part is substantially flush with the ground, while it is ensured that the vessel part 20 of the slug trap contains a luring liquid in an amount sufficient to attract and kill the slugs.

### Description of the Drawing

Fig. 1a shows in a perspective view an example of a slug trap according to the present invention.
Fig. 1b is a sectional view of a the slug trap shown in Fig. 1a.
Fig. 2a shows a slug trap according to the present invention, as seen from above. The slug trap in Fig. 2a is rotationally symmetric.
Fig. 2b shows a slug trap according to the present invention, as seen from above. The slug trap in Fig. 2b has a triangular cross-section.
Fig. 2c shows a slug trap according to the present invention, as seen from above. The slug trap in Fig. 2c has a four-edged cross-section.
Fig. 2d shows a slug trap according to the present invention, as seen from above. The slug trap in Fig. 2d has a hexagonal cross-section.
Fig. 3a shows the ramp part of a slug trap according to the present invention, as seen from above. The ramp part has rectilinear geometry.

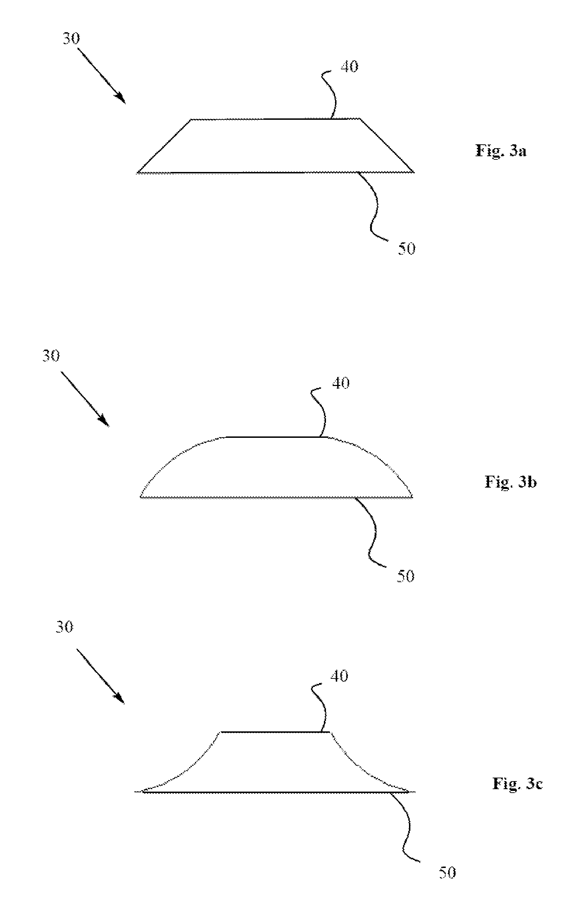

Fig. 3a shows the ramp part of a slug trap according to the present invention, as seen from above. The ramp part curves downwards and thus has a convex geometry.
Fig. 3c shows the ramp part of a slug trap according to the present invention, as seen from above. The ramp part curves inwards and thus has a concave geometry.

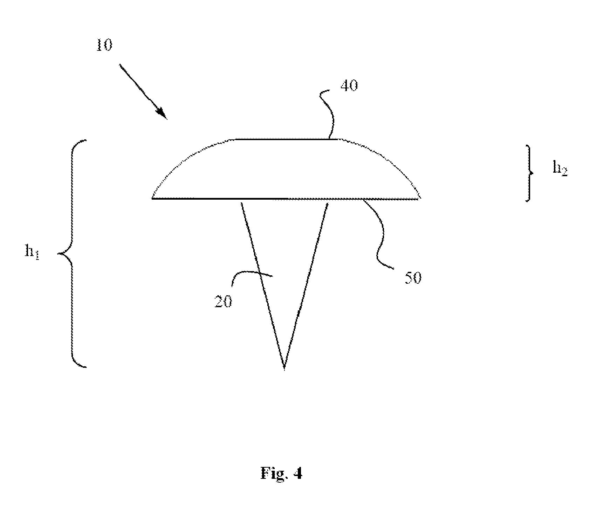

Fig. 4 shows a slug trap according to the present invention, as seen from the side. The vertical extension of the vessel part is indicated as h₁, while the vertical extension of the ramp part is indicated as h₂.

### Detailed Description of the Invention

In the following detailed description and the attached patent claims, the terms "vertical direction" and "horizontal direction" when referring to a direction of the slug trap are to be construed as vertical direction and horizontal direction, respectively, of the slug trap when oriented in the direction intended in use, i.e. when the opening of the slug trap is facing upwards.

In a first aspect, the present invention concerns a slug trap, preferably for Spanish slugs, wherein the slug trap is of the kind where slugs are lured down into a luring liquid, after which they die, preferably by drowning or dissolving. The slug trap includes:
i) a vessel part 20 which is suited for containing a luring liquid which attracts slugs, where the vessel is closed downwards and open upwards, as the vessel part has an upper edge 40 defining an opening, and where the upper edge of the vessel part defines a transition to:
ii) a ramp part 30 extending outwards and downwards relative to the interior of the vessel part and which is terminated by a lower edge 50;
wherein the vessel part 20 is tapering downwards and has a dimension in vertical direction which is greater than the dimension of the ramp part 30 in vertical direction;
wherein the slug trap is suited for stacking as it has a design that enables that the vessel part of one slug trap can be put down into a vessel part of another slug trap for achieving a stack; and
wherein the ratio between the dimension of the ramp part in vertical direction (h₂) and the dimension of the vessel part in vertical direction (h₁) is h₂/h₁ = 0.2 - 0.5.

The ramp part 30 of the slug trap defines a ramp for slugs whereby the slugs' access to the luring liquid of the vessel part is facilitated. In addition, the tapering of the vessel part enables secure fixing in the ground at the point where the trap is desired to be placed, as the vessel part of the slug trap may easily be trod partly down into the earth without use of tools such that the lower edge (50) of the ramp part at least partly touches the ground.

In a preferred embodiment, the ramp part 30 is designed so as to extend outwards and downwards in relation to the interior of the vessel part in any direction 360° around the opening of the vessel part, thus ensuring easy access for the slugs to the interior of the vessel part irrespectively of the direction from which they come.

The slug trap according to the present invention may have different geometries. In a preferred embodiment, the slug trap according to the present invention has at least one vertically oriented plane of symmetry. In such an embodiment, the upper edge may be circular or have a polygonal geometry. Examples of preferred polygons are triangle, quadrangle, pentagon, hexagon. However, heptagons and octagons may also be applied. It is preferred that the polygon defining the upper edge 40 of the slug trap is an equilateral polygon.

In the same way, the vessel part of the slug trap may have a cross-section which is circular. Alternatively, this cross-section may have polygonal geometry. Examples of preferred polygons are triangle, quadrangle, pentagon, hexagon. However, heptagons and octagons may also be applied. It is preferred that the polygon defining the cross-section of the vessel part of the slug trap is an equilateral polygon.

It is preferred that the upper edge of the slug trap and the cross-section of the vessel part have the same geometry. In a preferred embodiment, the slug trap according to the present invention has a shape which is rotationally symmetric. In such an embodiment, the vessel part of the slug trap is conical, and in such an embodiment the lower edge 50 of the ramp part 30 of the slug trap is circular and the opening of the vessel part is circular. Furthermore, it is preferred that the surface of the ramp part of the slug trap is shaped as a frustum of a cone, or alternatively that the surface of this ramp part has a convex geometry. As an alternative to the conical shape of the vessel part, a vessel tapering downwards can be mentioned, the wall(s) of which becoming more and more steep in direction towards the upper edge 40 of the vessel part. This has the advantage that it becomes even more difficult for the slugs to escape the vessel, as the wall(s) of the vessel is(are) more vertical at the point close to the ground surface. An example of such a shape of the vessel part is a parabola-like shape, e.g. a paraboloid.

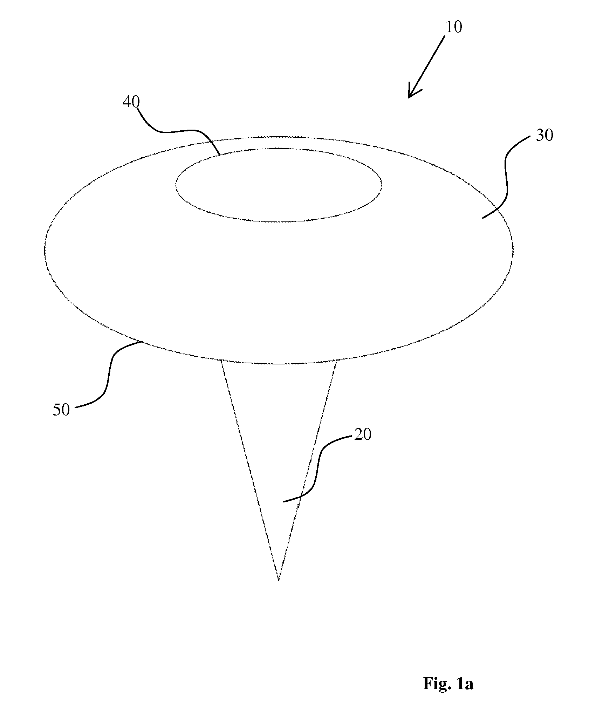

Fig. 1a shows in a perspective view a preferred embodiment of a slug trap according to the present invention. The slug trap in Fig. 1a is rotationally symmetric and consists of a conical vessel part 20 and a ramp part having a convex geometry. It is preferred that the ramp part is of relatively thin material, such as a material with a thickness corresponding to the material thickness of the vessel part.

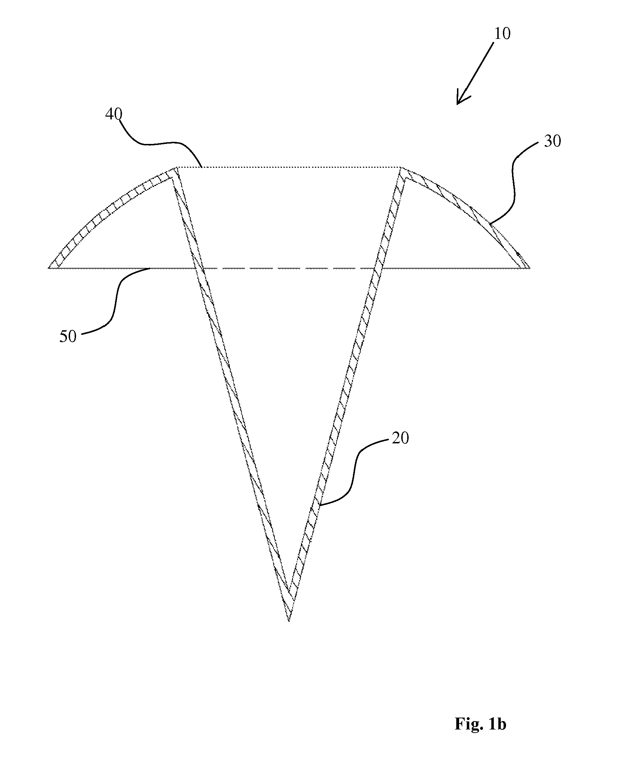

In Fig. 1b is shown a sectional view of the slug trap in Fig. 1a. The section is laid through the vertical axis of symmetry of the slug trap.

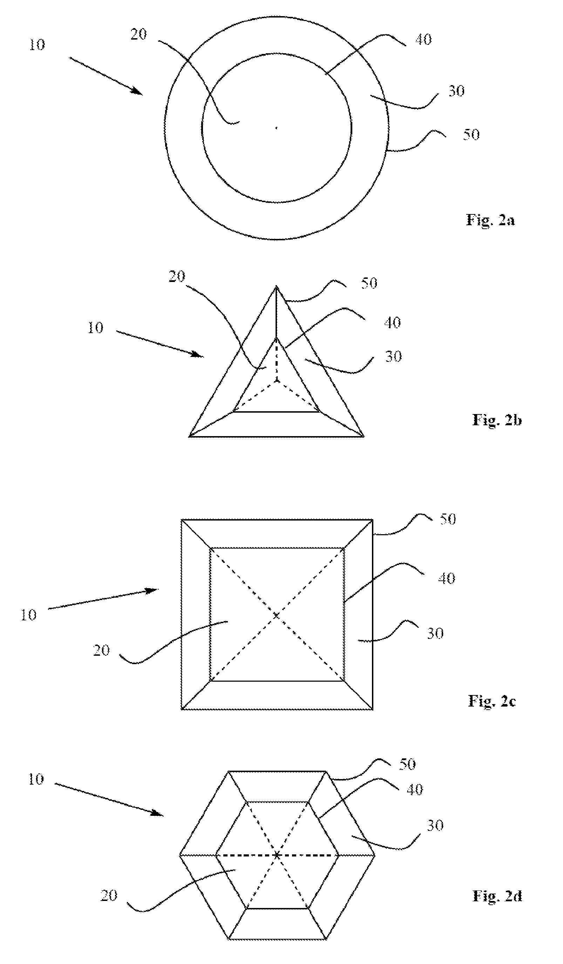

In Figs. 2a - 2d appears a plan view of examples of various embodiments of a slug trap according to the present invention. Fig. 2a shows the embodiment according to Fig. 1a. Fig. 2b shows an embodiment where the cross-section of the vessel part as well as the ramp part have triangular shape. Fig. 2c shows an embodiment where the cross-section of the vessel part as well as the ramp part have quadrangular shape. Fig. 2d shows an embodiment where the cross-section of the vessel part as well as the ramp part have hexagonal shape.

The slug trap may have any dimensions that ensure efficient catching of slugs. As the slug trap according to the present invention is particularly intended for Spanish slugs that may have a length of 12 cm, it is preferred that the slug trap according to the present invention has a vessel part with a vertical dimension ensuring that the slug cannot get free after it has crawled down into the interior of the vessel part. Thus it is preferred that the slug trap has a vertical dimension h₁ of 10 - 35 cm, such as 12 - 30 cm, e.g. 15 - 28 cm, such as 17 - 25 cm, e.g. 20 - 23 cm.

In the case that the slug trap according to the present invention includes a vessel part with a circular opening, it is preferred that the opening of the vessel part has a diameter of 5- 20 cm, such as 7- 15 cm, e.g. 10- 12 cm.

In the case that the slug trap according to the present invention includes a vessel part with a polygonal opening, it is preferred that the opening of the vessel part has an area of 75- 1300 cm², such as 150- 700 cm², e.g. 300- 450 cm².

Also, in the case that the slug trap according to the present invention includes a ramp part with a polygonal geometry, it is preferred that the lower edge 50 of the ramp part defines an area of 700- 5000 cm², such as 1300- 4500 cm², e.g. 1500- 3800 cm², such as 2000- 3200 cm², e.g. 2500- 2800 cm².

In the direction defining the maximum inclination, the ramp part 30 may curve inwards with a concave geometry. Fig. 3c shows the ramp part of a slug trap (as seen from the side) with this geometry. Alternatively, in the direction defining the maximum inclination the ramp part 30 may curve outwards with a convex geometry. Fig. 3b shows the ramp part of a slug trap (as seen from the side) with this geometry. In yet an alternative embodiment, in the direction defining the maximum inclination the ramp part 30 may have a rectilinear geometry, as it is neither curving inwards nor outwards. Fig. 3a shows the ramp part of a slug trap (as seen from the side) with this geometry. A concave or convex geometry ensures increased tensile strength of the slug trap, which may be advantageous particularly for use in sticky or argillaceous soil.

It is important with the ramp part having an inclination that enables the slug's climbing of the ramp. On the other hand, it is desirable that the ramp has a certain inclination such that it may be avoided that a certain part of the upper part of the vessel part of the slug trap is to be depressed into the earth, as the slug trap is only to be depressed to the extent ensuring that the lower edge of the ramp part is touching the earth. This will facilitate the fixing of the slug trap in the earth. Thus it is preferred that the ramp part has an inclination relative to horizontal of 5° - 60°, such as 10° - 50°, e.g. 15° - 45°, such as 20° - 40°, e.g. 25° - 35°, e.g. about 30°. The inclination of the ramp is defined as the angle between horizontal and an imaginary line running from a point at the lower edge of the ramp part to the nearest point at the upper edge of the vessel part. In case that the ramp part has a concave or convex geometry, the slope of the ramp part thus in a proper sense defines a kind of "average inclination".

The slug trap according to the present invention has a vessel part, the vertical dimension of which being greater than the vertical dimension of the ramp part. The ratio between the dimension of the ramp part in vertical direction (h₂) and the dimension of the vessel part in vertical direction (h₁) is thus h₂/h₁ = 0.2 - 0.5.

In Fig. 4 is shown what is understood as the vertical dimension of the vessel part and the vertical dimension of the ramp part.

In a particularly preferred embodiment of the slug trap according to the present invention, the uppermost part of the vessel part, such as the upper 1 - 4 cm, e.g. 2 - 3 cm, has a different inclination relative to vertical than the rest of the vessel part, as the curvature of the vessel part includes an elbow at this position. Such a differentiated inclination of the upper part of the vessel will enable several vessels stacked within each other to be easily separated. Alternatively, this effect is achieved in that the inner wall of the vessel includes one or more small projections which provide that the outer side of a vessel of a slug trap inside the vessel of another slug trap has limited contact with the inner side of the vessel part of this other slug trap, thus facilitating separation. The slug trap according to the present invention can be made of any kind of suitable material. A material which may be an option is a waterproof, organically decomposable material, such as cellulose fibres of various types. It is essential that the vessel part is made of a material which can hold a liquid such that the luring liquid does not seep through the vessel material. Another suitable material is plastic, such as mouldable plastic, such as may be injection moulded. Suitable types of plastic are i.a. ABS (acrylonitrile butadiene styrene); nylon; polyethylene; polypropylene; and PVC (polyvinyl chloride).

In a preferred embodiment, vessel part 20 and ramp part 30 of the slug trap are made in one piece.

A slug trap according to the present invention including a conical vessel part 20 and a convex ramp part, where the slug trap is rotationally symmetric, and where the vertical dimension of the vessel part h₁ is about 20 cm, where the upper edge 40 of the ramp part defines a circle with a diameter of about 10 cm, and where the lower edge 50 of the ramp part defines a circle with a diameter of about 21 cm, and where the vertical dimension h₂ is about 5.5 cm, has appeared to be particularly advantageous. Such dimensions of the slug trap ensure efficient control of slugs, and the inner volume of the vessel fits with the contents of a bottle of pilsner beer, such that the liquid level by filling a pilsner (33 cl) appears a couple of centimeters above the lower edge 50 of the ramp part of the slug trap.

In a second aspect, the present invention concerns a method for making a slug trap according to the present invention, wherein the slug trap is made of plastic, preferably by moulding, preferably injection moulding.

The simple form and light construction of the slug trap will ensure that the trap is very cheap to produce. Besides, it may be designed such that they may be stacked in a way where the vessel part of one slug trap can be put down into the vessel part of another slug trap. This stacking ability is not possible with the prior art slug traps. The stacking ability entails cost-favourable transport and storage, which in turn ensures that the slug trap can be kept at a very favourable price level, in turn entailing a greater possibility of a greater part of the population being encouraged to provide an active effort against the invasion of the Spanish slug.

In a third aspect, the present invention concerns use of a slug trap according to the invention for catching and controlling slugs, preferably Spanish slugs.

In a fourth aspect, the present invention concerns a method for catching and controlling slugs, preferably Spanish slugs. The method is performed in that a slug trap 10 is positioned in a place where slugs are found to be a nuisance, as the vessel part 20 of the slug trap is partly pressed into the earth such that the lower edge 50 of the ramp part at least partly touches the ground, preferably such that the lower edge of the ramp part is substantially flush with the ground, while it is ensured that the vessel part 20 of the slug trap contains a luring liquid in an amount sufficient to attract and kill the slugs.

The special design of the slug trap with a vessel part that tapers downwards ensures that the slug trap may easily be trod partially down into the soil by a foot without using any tools. This will considerably facilitate the distribution of a large number of slug traps in particular. Correspondingly, the slug trap may easily be emptied of slugs as it may easily be lifted off its hole, be emptied of slugs and put down into the same hole, or a new hole which in turn is generated by treading.

The luring liquid provided to attract the slugs according to the method may be beer, suspended brewer's yeast, water containing cucumber or melon; or other traditional or conventional luring liquid that has proved to be effective.

In a preferred method according to the present invention, the luring liquid may additionally contain poison acting against slugs, such as iron phosphate.

Since the slug trap is partly lowered into the ground, and since the visible part of the slug trap is constituted by the relatively flat ramp part, the slug trap seems to have a visual expression which is more neutral than the prior art slug traps. The slug trap according to the present invention does not mar gardens so much as the prior art designs.

## Claims

1. A slug trap (10), preferably for Spanish slugs, wherein the slug trap is of the kind where slugs are lured down into a luring liquid, after which they die, preferably by drowning or dissolving, where the slug trap in the orientation intended in use includes:
i) a vessel part (20) which is suited for containing a luring liquid which attracts slugs, where the vessel is closed downwards and open upwards, as the vessel part has an upper edge (40) defining an opening, and where the upper edge of the vessel part defines a transition to:
ii) a ramp part (30) extending outwards and downwards relative to the interior of the vessel part and which is terminated by a lower edge (50);
wherein the vessel part (20) is tapering downwards and has a dimension in vertical direction which is greater than the dimension of the ramp part (30) in vertical direction;
wherein the slug trap is suited for stacking as it has a design that enables that the vessel part of one slug trap can be put down into a vessel part of another slug trap for achieving a stack;
wherein the ratio between the dimension of the ramp part in vertical direction (h₂) and the dimension of the vessel part in vertical direction (h₁) is h₂/h₁ = 0.2 - 0.5;
wherein the ramp part (30) thus defines a ramp for slugs by which the slugs' access to the luring liquid of the vessel part is facilitated, and where the tapering of the vessel part enables secure fixing in the ground at the point where the traps is desired to be placed, as the vessel part of the slug trap may easily be trod partly down into the earth without use of tools such that the lower edge (50) of the ramp part at least partly touches the ground.

2. Slug trap according to claim 1, wherein the ramp part (30) extends outwards and downwards in relation to the interior of the vessel part in any direction 360° around the opening of the vessel part, thus ensuring easy access for the slugs to the interior of the vessel part irrespectively of the direction from which they come.

3. Slug trap according to claim 1 or 2, wherein the slug trap (10) has a design including at least one vertically oriented plane of symmetry.

4. Slug trap according to claim 1, 2 or 3, wherein the slug trap (10) has a design which is rotationally symmetric.

5. Slug trap according to any of claims 1 - 4, wherein the vessel part (20) of the slug trap (10) is conical.

6. Slug trap according to any preceding claim, wherein the lower edge (50) of the ramp part (30) is circular and/or where the opening of the vessel part is circular.

7. Slug trap according to claim 5 and 6, wherein the vertical dimension of the vessel part h₁ is 10 - 35 cm, such as 12 - 30 cm, e.g. 15 - 28 cm, such as 17 - 25 cm, e.g. 20 - 23 cm; and/or where the lower edge (50) of the ramp part has a diameter of 15 - 40 cm, such as 20 - 38 cm, e.g. 22 - 35 cm, such as 25 - 32 cm, e.g. 28 - 30 cm; and/or where the opening of the vessel part has a diameter of 5 - 20 cm, such as 7 - 15 cm, e.g. 10 - 12 cm.

8. Slug trap according to any preceding claim, wherein the ramp part (30) has an inclination relative to horizontal of 5° - 60°, such as 10° - 50°, e.g. 15° - 45°, such as 20° - 40°, e.g. 25° - 35°, e.g. ca. 30°.

9. Slug trap according to any preceding claim, wherein the ramp part (30) in the direction defining the maximum inclination is curving inwards with a concave geometry, or wherein the ramp part (30) in the direction defining the maximum inclination is curving outwards with a convex geometry, or where the ramp part (30) in the direction defining the maximum inclination is neither curving inwards nor outwards but has a rectilinear geometry.

10. Slug trap according to any preceding claim, **characterised in that** the slug trap is made of plastic or a waterproof, organically decomposable material.

11. Slug trap according to any preceding claim, **characterised in that** the vessel part (20) and the ramp part (30) are made in one piece.

12. A method for making a slug trap (10) according to any of claims 1 - 11, **characterised in that** the slug trap is made of plastic, preferably by moulding, such as injection moulding.

13. Use of a slug trap (10) according to any of claims 1 - 11 for catching and controlling slugs, preferably Spanish slugs.

14. A method for catching and controlling slugs, preferably Spanish slugs, **characterised in that** a slug trap (10) according to any of claims 1-11 is positioned in a place where slugs are found to be a nuisance, as the vessel part (20) of the slug trap is partly pressed into the earth such that the lower edge (50) of the ramp part at least partly touches the ground, preferably such that the lower edge of the ramp part is substantially flush with the ground, while it is ensured that the vessel part (20) of the slug trap contains a luring liquid in an amount sufficient to attract and kill the slugs.

15. Method according to claim 14, wherein the luring liquid is beer; brewer's yeast in suspension; water containing melon; or other traditional or conventional luring liquid; and wherein the luring liquid possibly further contains poison which is active against slugs, such as iron phosphate.
